# EUROPEAN PATENT APPLICATION

(11) **EP 0 814 174 A1**
(43) Date of publication of application: **29.12.1997**
(21) Application number: 97304331.8
(22) Date of filing: 19.06.1997
(51) Int. Cl.: C23C 4/04, B05D 3/06

(54) **Glassy carbon coatings having water repellant and corrosion-erosion-, and wear-resistant characteristics**

(30) Priority: 20.06.1996 US 668563
(71) Applicant: QQC, INC., Dearborn, MI 48126 (US)
(72) Inventor: Liu, Shengzhong, Canton, Michigan 48187 (US); Mistry, Pravin, Shelby Township, Michigan 48316 (US)
(74) Representative: Price, Nigel John King

(57) **Abstract**

A method for providing a glassy carbon coating to a substrate for producing a protected substrate is disclosed. The glassy carbon coating may formed through use of a plasma gas gun delivering a plasma to a substrate. In the plasma gas embodiment, powdered carbon or an alternative polymerizable material is introduced into the ionized gas stream for application to a substrate. According to an alternate embodiment of the present invention, the substrate is dipped and coated with a polymerizable material and the coated substrate is exposed to a heat source such as one or more lasers, thus transforming the coating into a glassy carbon coat.

The coat produced through any application method of the present invention provides a barrier to corrosion, erosion, wear and high heat. A substrate so coated may be exposed to extreme environments, high heat, low heat, wet, dry, or surface contacting without showing any significant degradation.

## Description

This invention relates to coatings which are water repellant and which have corrosion-, erosion-, and wear-resistant characteristics. More particularly, this invention relates to the use of glassy carbon coatings to provide water repellant and corrosion-, erosion-. and wear-resistance to a variety of surfaces on a variety of articles.

It is estimated that the direct-loss cost of corrosion is about 3 to 4 percent of the gross national product (GNP) in developed countries. Further reports include that the annual loss in the U.S. from corrosion was estimated as $143 billion in 1982 vs. $70 billion in 1977. Similar losses in other countries were £2 billion in the U.K. in 1975 and five billion Australian dollars in 1982. These estimates pertain to direct losses which do not count losses caused by equipment shutdown, efficiency, product and in-process materials, storage, transportation and product contamination.

Corrosion has greater adverse impact on certain industries than others. It has been reported that recent surveys of fleet vehicles have persistently concluded that general corrosion, pitting, and crevice corrosion are ubiquitous among engine and exhaust systems of several different vehicles. Typical problem areas include engine exhaust manifolds, exhaust pipes, mufflers, and exhaust systems. These areas are exposed to more severe environments, such as high temperature, where coatings often fail. More durable coatings with higher adhesion and high temperature stability need to be developed.

Metal-hulled marine vehicles are particularly susceptible to costly corrosion. It has been reported that the U.S. Navy spends about $200,000,000 each year in reduced fuel efficiency and drydocking because of barnacles and corrosion. The world-wide merchant marine industry spends even more. A recent DOD SBIR proposal solicitation pointed out that "many corrosion problems experienced by the Marine Corps are caused by exposure to salt air/spray during exercises or on deployment. Vehicles are typically found throughout the world, used in every conceivable environment embarked on Landing Craft Air Cushion (LCAC) and in the well deck of ships. ... For example, a system such as the Assault Amphibian Vehicle has unacceptable corrosion levels found in the engine, the transmission, the electric/communications system, the suspension system, and virtually all attached or collateral gear." In general, corrosion speeds up life cycles of equipment, reduces operational availability, and increases manpower requirements to maintain operability as well as downtime costs.

Another DOD SBIR proposal solicitation indicates that rotor blade erosion has been a chronic problem for the Army and other services for many years. The problems associated with sand and rain impingement on blade leading edges and surfaces have resulted in severe damages and the resultant expenditures to replace, repair and maintain blades have been significant. The severity of the sand erosion problem was recently demonstrated in the Middle East during the Desert Shield/Desert Storm conflict. An optimum erosion system for a rotor blade requires a design that is effective in both rain and sand environment. Testing performed to date shows that metallic (hard) erosion systems perform best in rain, and nonmetallic (soft/pliable) materials perform best in sand. An acceptable protective design compromise capable of extended performance in both sand and rain has yet to be fielded.

Automobile companies are exploiting the use of carbon and carbon fiber type materials for structural and tribological engineering components. A serious problem they are facing is that the epoxy used to bond the carbon fiber and the base does not withstand at high operational temperatures.

Since all of these problems result in costly maintenance, repairs, downtime, product contamination, loss through leakage, etc., it is one of the most important factors in materials selection for most applications, especially when the service environment is hostile -- such as circumstances of very high or very low temperature, high corrosion, erosion, and stresses. Due to the huge cost -- 3% to 4% of the gross national product (GNP), great efforts have been put into the development of corrosion resistant technology. Corrosion standards and control procedures have long been established (though they are not as effective as they are expected to be) for some industries, such as petroleum, gas, automotive, pipeline, telephone, marine, nuclear power, chemical, nonferrous metals, iron and steel etc.

Measures employed so far to counter these problems may be categorized into: (1) electrochemical means including anodic or cathodic protection to minimize galvanic corrosion; (2) passivation methods which introduce minor constituents into the corrosive medium, into the composition of the material, or onto its surface; and (3) isolation by coating the materials with a more corrosion-resistant protective layer including both inorganic and organic materials in chlorinated rubber, polyurethane, phenolic, epoxy, and oleoresinous. Inorganic paints like silicone resins etc.) and relatively high tech PVD or CVD coatings are seen everywhere.

However, all of the above organic paints can only function at low temperatures, with the maximum service temperature for silicone based paints being only about 500°C. Although oxides (e.g. alumina, chromium oxide) coatings and aluminides (e.g. nickel, iron, and titanium) are often found effective for high temperature oxidation-resistant applications, the effective protective coating for high temperatures seawater-involved marine engine application remains to be developed. On the other hand, new Ni-Cr-Mo based alloys are claimed to offer adequate strength under high temperatures and corrosion resistance in applications where stainless steel and many other metals and alloys would fail. However, they are generally very costly.

In addition, there have been substantial developments in newer stainless steels, high-strength low-alloy steels, superalloys, plastics, ceramics, and composites over the last decade or so. Concepts of energy-saving and ecology-preserving have brought about increasing use of lighter materials such as aluminum, beryllium, lithium, magnesium, plastics, and composites in the aerospace, automotive, and marine industries. This trend has fueled and will continually fuel development of stronger and more corrosion-resistant coatings.

Corrosion and surface erosion are essentially surface-specific phenomena. In fact, corrosion begins as a surface reaction on a surface coating, and treatment can render substantial improvement in corrosion control. Hence, development of corrosion resistant coatings, especially for high temperature operation, has been a major interest. Coating techniques employed have included both physical and chemical vapor deposition (PVD and CVD). Other means of surface treatment, such as ion implantation, have been used as well. New materials, e.g. metal- and ceramic-matrix composites, are also developed for this application. However, the focus in the field has always been on metallic, composite coatings, including precious metal (platinum and platinum/rhodium) modified aluminide coatings; and chromium, titanium and silicon coatings, especially for applications of hot corrosion resistance. The coatings used to protect the hot-section turbine blades of marine gas turbines are often a mixture of cobalt, chromium, aluminum, and yttrium. Noble metal modification is found to improve the performance of the aluminide coating in terms of resistance to corrosion and oxidation. Yttrium stabilized zirconia, on the other hand, is frequently found for thermal barrier coatings. Although polymer-on-metal systems have been proven to be effective for low temperature corrosion resistance, polymers are not stable at elevated temperatures.

In summary, there have been significant efforts and progresses in corrosion control. However, corrosion, erosion and wear remain to be major problems for most industries, especially for high temperature, hostile environments, such as marine engine and exhaust components.

It is therefore an object of the present invention to overcome the disadvantages associated with known coatings by providing an improved coating which safely and effectively prevents corrosion to a variety of materials in a variety of environments.

A further object of the present invention is to provide a coating which may be easily applied to the variety of materials.

Yet a further object of the present invention is to provide such a coating which is low cost and which requires virtually no maintenance.

Still a further object of the present invention is to provide such a coating for components and systems operating in high temperature environments.

Yet another object is to provide such a coating which may readily be applied to a variety of substrates which may be composed of metals, non-metals, or metal alloys.

An additional object of the present invention is to provide such a coating which may be formed through plasma directed to a substrate.

A further object of the present invention is to provide such a coating which may be applied through first dipping the substrate into a polymeric solution then exposing the dipped object to one or more lasers.

These and other objects are accomplished by providing a glassy carbon coating on a substrate. The glassy carbon coating may be formed through use of a plasma gun delivering an ionized, carbon-rich plasma to a substrate. In the plasma embodiment, powdered carbon or an alternative polymerizable material is introduced into the ionized gas stream for application to a substrate. According to an alternate embodiment of the present invention, the substrate is dipped and coated with a polymerizable material and the coated substrate is exposed to an energy source such as one or more lasers, thus transforming the coating into a glassy carbon coat.

Alternative methods such as thermal gas delivery and sputtering may be employed to deliver the glassy carbon coat to the substrate.

The coat produced through any application method of the present invention provides a barrier to corrosion, erosion, wear and high heat. A substrate so coated may be exposed to extreme environments including high heat, low heat, wet or dry conditions, or surface contacting without significant degradation.

The invention will be further described by way of example with reference to the accompanying drawings of which:
Figure 1 is a sectional view of a plasma gun used for delivering a plasma spray according to one coating technique of the present invention in association with a substrate being coated;
Figure 2 is a flow chart showing the steps involved in applying a plasma spray carbon coating according to one coating technique of the present invention,
Figure 3 is a perspective view of an array of lasers used for transforming an applied coating of polymeric solution into a glassy carbon coating according to another coating technique of the present invention;
Figure 4 is a flow chart showing the steps involved in applying a polymeric coating and transforming the applied polymeric coating into a glassy carbon coating;
Figure 5 is a sectional view illustrating a substrate coated according to the method of the present invention; and
Figure 6 is an exemplary view of a package coated with a glassy carbon coating according to the present invention.

Glassy carbon, an essentially pure carbon material with a highly crosslinked and disordered structure, behaves like diamond-like carbon (DLC) in major physical and chemical properties. It is hard and is inert to many typical chemicals including acids, bases, and salts (even to many salt-like metallic and ceramic melts); stable at elevated temperatures (3000°C in vacuum or in protective gas and 800°C in air); resistant to corrosion, thermal shock, wear and wetting; hydrophobic and non-toxic; and impermeable to gas and liquids. It is also biocompatible, hence safe to the human body.

### 1. Materials

### a. Glassy Carbon - In General

According to the present invention, a glassy carbon coating is formed on any one of a variety of substrates. G!assy carbon is a highly cross-linked polymer of substantially pure material (both hydrogen and nitrogen having been driven out). Its characteristics approximate those of diamond or diamond-like carbon.

Compared to other pure carbon materials (including diamond, graphite and amorphous carbon), glassy carbon and fullerenes are relatively new materials. Although very extensive research has been done on fullerenes regarding their structures (molecular and crystal) properties and possible applications, very little understanding has been achieved on glassy carbon beyond its typical physical properties, as briefly summarized in the Table below.

**TABLE -**

| **PROPERTIES OF COMMERCIAL GRADE GLASSY CARBON** | | | |
|---|---|---|---|
| | | Type 1** | Type 2* |
| Bulk density | g/cm³ | 1.54 | 1.42 |
| Maximum service temperature | °C | 1100 | 3000 |
| Open porosity | % | 0 | 0 |
| Helium Permeability Coefficient | cm²/s | 10⁻¹¹ | 10⁻⁹ |
| Vickers hardness | HV₁ | 340 | 230 |
| Flexural strength | N/mm² | 210 | 260 |
| Compressive strength | N/mm² | 580 | 480 |
| Young's modulus | kN/mm² | 35 | 35 |
| Coefficient of thermal expansion (20-200°C) | 1/K | 3.5E-6 | 2.6E-6 |
| Thermal conductivity (30°C) | W/(K.m) | 4.6 | 6.3 |

| | | | |
|---|---|---|---|
| * Type 1, production temperature 1100°C. | | | |
| ** Type 2, production temperature 2200°C. | | | |

Glassy carbon is light in weight, non-porous, and stable at high temperature. It is highly resistant to chemical attack and corrosion. In fact, it is extremely stable under severe corrosion caused by acids, alkaline agents and melts. Regarding the structure, limited studies show long range disorder with ordered zones in smaller scale. The disordered regions include four and five membered rings with bonding distance between 2.5 and 3.5 angstrom. The ordered regions are characterized by various topographical features including rows of atoms with spacing of 3.40 ± 0.15 Angstrom. Both diamond-type and graphitic structures were observed. In addition, an unknown square lattice with spacing of about 1.8 angstrom was discovered. Another STM study carried out by Brown et al. also resolved fibrillar and granular features in large scale up to around 10 nm. Electron microscopy, X-ray photoelectron spectroscopy, X-ray diffraction, Raman spectroscopy have also been used to characterize glassy carbon. They basically end up with the same conclusion, i.e. glassy carbon contains crystalline domains in an amorphous carbon matrix. Recently, an investigation of surface modification with a cold plasma treatment was performed by T. Ohte et al. They found the surface wetting property of glassy carbon with water can be turned by controlled plasma treatment. The contact angle may be prompted to as large as 134° by their fluorine-containing plasma treatment. This raises promises for water-repellent applications.

All in all, glassy carbon is a pure carbon material with highly crosslinked and disordered structure. Since it is produced by thermally decomposing polymers at high temperatures, it is stable at high temperatures and may be employed for high power applications. The pure carbon nature makes the glassy carbon inert to chemicals including acids, bases, and salts (even to many salt-like metallic and ceramic melts). Its hydrophobic and non-toxic properties make it a good biocompatible (to both blood and tissue) material. Due to its highly cross-linkage, it is light in weight, mechanically hard and strong. Thanks to its highly disordered structure, it is physically and mechanically Isotropic, chemically not capable of forming intercalation compounds. It is basically impermeable to gas and liquids. In fact, the permeability test by vacuum drop method with helium -- the smallest stable material -- gives only 10⁻¹¹ cm²/s.

As a consequence of the above properties, glassy carbon is resistant to corrosion and wear. It neither enters nor accumulates in the human body therefore is biologically inert. It is a "green" material because it does not harm the ozone layer, nor does it cause any other environmental problems, unlike many other materials

### b. Glassy Carbon In Powder Form

A variety of commercial grade glassy carbon powder are available as one of the primary starting materials. One such powder is available from Alfa ASEAR® (trademark). It is possible that another ingredient may be introduced into the glassy carbon coating, e.g. silicon or metallic components, to improve resistance to oxidation. This requirement would naturally depend upon the anticipated environment of the object.

### c. Polymer Precursors For Use In Plasma Process

In lieu of using a glassy carbon powder as a starting material, three-dimensionally crosslinked polymer precursors may be used. Such polymers may include any one of a phenolic or furfurilic resin, PMMA, or polyamide. In addition, other polymers may well be suitable, and this list is intended as being illustrative and not limiting.

It is known that the glassy carbon may be prepared in either inert gas (e.g. argon atmosphere) or vacuum by pyrolyzing thermally hardening highly three dimensionally crosslinked polymers, such as polyphenylenes, polyimides, aromatic epoxy formulations and phenolic and fruan resins. Therefore, it is expected that glassy carbon or DLC may be formed in the argon plasma spray process.

### d. Polymer Precursors For Use In Laser Process

As mentioned above, a laser process may be used in lieu of the plasma spray process discussed above. In this situation, a substrate is dipped into polymeric solution and is thereafter exposed to heat produced by radiation to transform the solution into a glassy carbon coating. Suitable polymers for this application include but are not limited to PMMA, polyamide, poly-furfuryl alcohol and phenolic or furfurlic resins.

### 2. Methods of Coating

A glassy carbon coating may be applied according to the present invention by a number of processes. These include spray operations (such as thermal or plasma sprays) as well as laser applications. Additional deposition processes, including sputtering, may be used. Set forth below are the two primary systems, although these are intended to be instructive and not limiting.

### a. Application Through Plasma Spray

A carbon coating may be applied through a plasma spray according to a first method of the present invention. According to this method, a spray operation cell is constructed to follow necessary safety regulations normally required for plasma spray operations.

In general, plasma is a stream of ionized gas. The gas is ionized as it is passed through an electric arc. Because this method provides for temperatures of up to 30,000 F., the use of a plasma flame allows deposition of very high-melting materials, such as carbon.

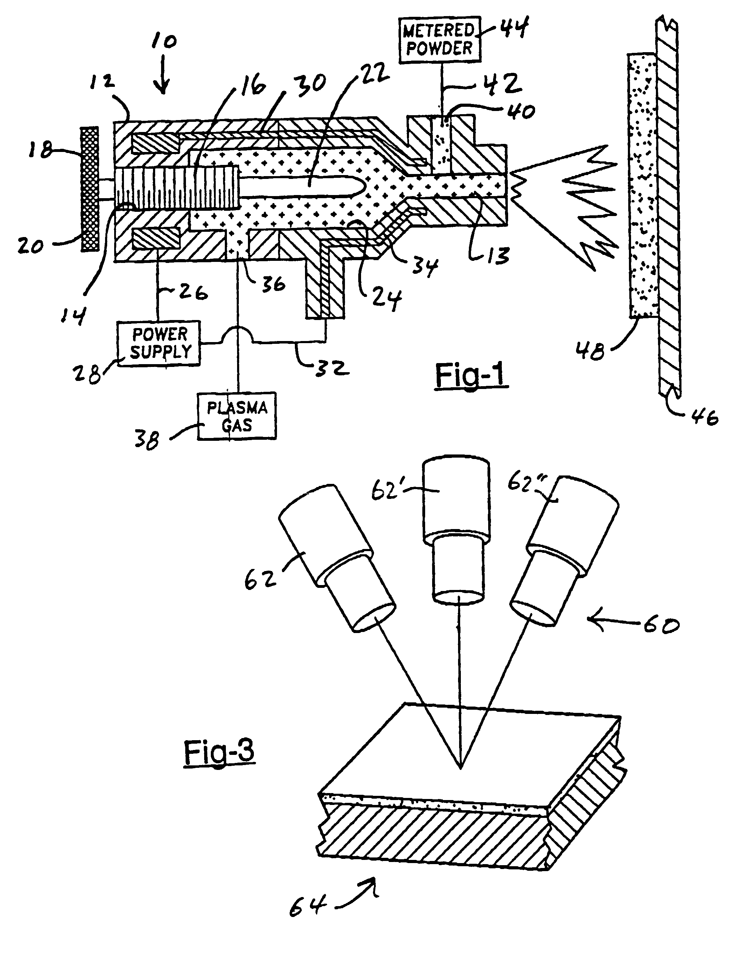

Referring to Figure 1, a plasma gun, generally illustrated as 10, is shown in cross section. The gun 10 includes a casing 12 formed from an insulating material, such as nylon. At one end of the casing 12 is formed an outlet 13. A threaded aperture 14 is formed in the other end of the casing 12 to threadably receive a threaded portion 16 of an electrode adjustment 18. The adjustment 18 includes a knurled knob 20.

At one end of the adjustment 18 is formed an electrode 22. The electrode 22 is positioned axially within the casing 12 and is, by rotation of the knob 20, capable of axial movement within the casing 12. A gas cavity 24 is centrally formed within the casing 12. A first power line 26 connects a power supply 28 to a first metallic strip 30, while a second power line 32 connects the power supply 28 to a second metallic strip 34. A gas port 36 is formed in the wall of the casing 12 to fluidly communicate the cavity 24 with a source of plasma gas 38.

Ionization of the gas is accomplished within the gun 10. As the ionized gas is directed to the nozzle, it combines with the powdered glassy carbon entering a port 40 formed in a wall of the casing 12. The port 40 is connected via a delivery line 42 with a source of powder 44. The powder is metered as it is delivered to the metallizing torch in a known manner.

The metallized plasma gas exits the nozzle 13 and is directed to a substrate 46 to form a glassy carbon coating 48.

Spray operating parameters such as coating speed, morphology, uniformity, crystallinity, and performance of the coating are adjusted according to the requirements of a given application of the substrate. Additional variables to be determined based on need include current, voltage, type and flow rate of carrier gas, distance between the substrate and spray nozzle, nozzle geometry, spray distance and angle, substrate temperature, and substrate bias.

An example of a suitable spray system is that supplied by METCO/PERKIN ELMER.

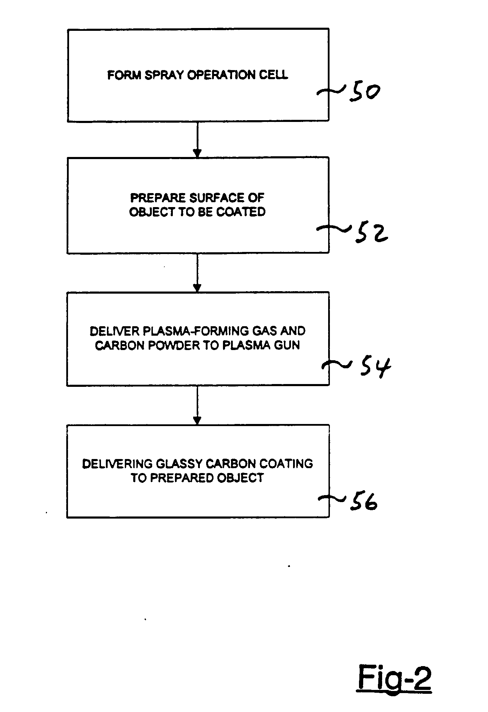

Figure 2 illustrates a flow chart showing the steps involved in applying a plasma spray carbon coating according to the plasma spray technique of the present invention. Step 50 is the step of forming a spray operation cell as is known in the art. Once a substrate is selected and all of the above-described parameters are established, the surface of the substrate may be prepared at optional Step 52 using appropriate cleaning and surface-etching solutions as required depending on the composition of the substrate. Optionally, a substrate pretreatment material may be applied to improve adhesive characteristics if necessary.

Thereafter, both gas and powder are delivered to the gun 10 or other glassy carbon coating delivery device to create an ionized, carbon-rich plasma at Step 54. Thereafter, the cleaned, prepared, and possibly pretreated object is then coated at Step 56. Optionally, the glassy carbon-coated object may be post-treated with a variety of materials as required for maximum performance.

It should be understood that while the application of the glassy carbon coating has been described with respect to a plasma gun, any process capable of synthesizing and applying glassy carbon onto a substrate may possibly be substituted therefor.

### b. Application Through Lasers

As an alternative to plasma spray technique, a glassy carbon coating may be formed using a combined process of dipping into a polymeric material and subsequent modification of the dipped coating through laser radiation so as to form a glassy carbon coating.

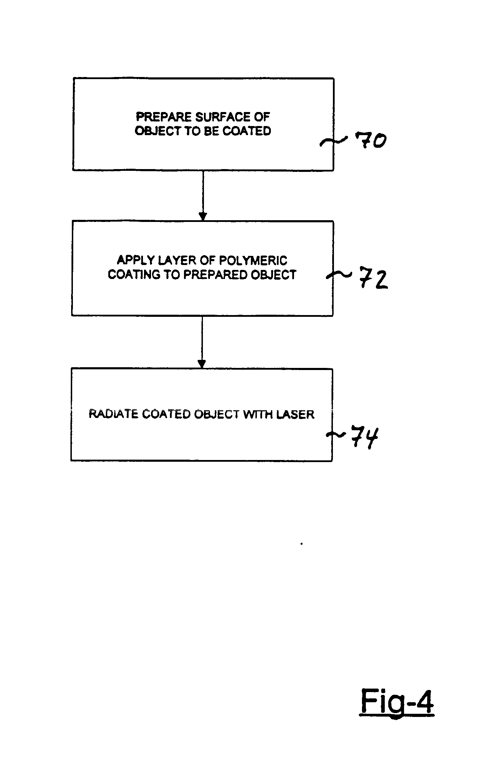

Specifically, it is known that glassy carbon may be produced in inert atmosphere at high temperatures with highly cross-linked polymeric materials. As illustrated in Figure 3, a laser arrangement, generally illustrated as 60, one or more lasers 62, 62', 62" may be arrayed about a coated substrate, generally illustrated as 64. The lasers 62, 62', 62" may be one or more of CO₂, Nd-YAG, or Excimer lasers. As illustrated, the lasers 62, 62', 62" are generally situated so that their produced beams roughly converge at a point near or on the surface of the substrate 64. This system is used to produce the desired energy so as to carry out transformation of the coating to its desired glassy carbon form.

Figure 4 illustrates a flow chart showing the steps involved in applying a polymeric coating and for transforming the applied polymeric coating into a glassy carbon coating. At optional Step 70, the substrate is prepared along the lines undertaken in Step 50 as set forth above in the method directed to plasma coating. Again, a pretreatment surface may be applied as required to improve adhesion.

The prepared and possibly pretreated object is then dipped into a polymeric solution to apply a layer of polymeric coating at Step 72. Thereafter, the coated object is radiated with one or more lasers (as shown in Figure 3) at Step 74 under an inert atmosphere, such as helium, argon, or nitrogen. The polymeric coating may be transformed into a glassy carbon coating under the laser irradiation. Optionally, a surface coating may be applied over the glassy carbon coating to provide additional substrate-protecting characteristics.

### c. The Coated Product

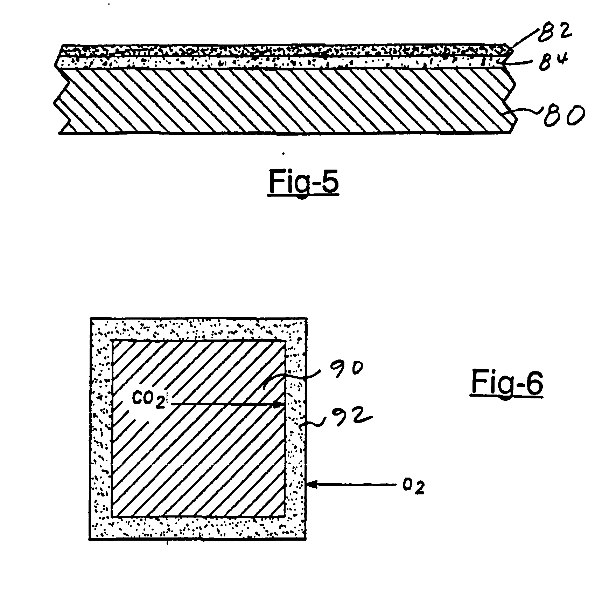

Figure 5 illustrates a partial sectional view of a product coated according to any of the methods of the present invention. As shown a substrate 80 includes a glassy carbon coating 82 formed thereabove. Optionally, a coating 84 may be applied to improve adhesion of the glass carbon coating 82 to the substrate 80. In addition, a top coat (not shown) may be applied to the glassy carbon coating 82 as required to maximize protection to the substrate 80.

### 3. Coating Uses

Glassy carbon coatings have uses on a variety of substrates exposed to a variety of environments. In general, glassy carbon may be used in high-temperature, wet, salinated, corrosive or erosive environments. The coating may be used as an insulating material or where refractory materials are required, or in environments where tolerance to thermal and mechanical shocks is important. It provides a slick surface for situations in which super-lubrication is required. Glassy carbon coatings also provide mirror-like finishes.

More particularly, the excellent properties of glassy carbon (e.g. wear, tear and chemical resistance, low friction coefficient, heat-resistance, biocompatibility as well as water-repellence) make the coating process of the present invention useful for offshore oil facilities, pipes, chemical plants, heat exchangers, automotive industry, and truck manufacturers. High precision turbine engine, diesel engine and air compressor manufactures can also benefit. Other uses include coating heating elements such as crucibles, heating tubes and plates, and high frequency couplers. The coating of the present invention also finds application on vacuum components.

In general, any applications which require high corrosion and wear resistance, low friction coefficient or water-repellence, biocompatibility would gain from this technology.

Because of its biocompatibility and wear-resistance as well as its corrosion-resistance to a salinated environment, a carbon coating applied according to the present invention would be highly valuable in the construction of medical surgical tools and prosthetics. In addition, a glassy carbon coating according to the present invention could be used to coat artificial heart valves so as to eliminate the need of patients to use blood thinners for the remainder of their lives.

Because of its water-repelling characteristic coupled with its corrosion-resistance, carbon coatings according to the present invention also have utility in the sports industry (for sporting equipment generally exposed to water) and in the marine industry in which the glassy carbon coating would protect underlying steel from salt water corrosion.

In addition, carbon coatings are thought to be able to keep water from sticking to coating surfaces and to prevent snow and water from accumulating on equipment. If applied to ship hulls, the coating could reduce drag, improve speed and fuel efficiency, and retard the growth of barnacles. Glassy carbon, as an excellent water-repellent material, should be useful in marine equipment, offshore oil facilities, pipes, underwater equipment, sports equipment, outdoor telecommunications equipment, buildings and any place that needs corrosion resistance and water-repellent performance.

As mentioned above, automobile companies are exploiting the use of carbon and carbon fiber type materials for structural and tribological engineering components. A serious problem they are facing is that the epoxy used to bond the carbon fiber and the base does not withstand at high operational temperatures. Glassy carbon will contribute in this development for texturing, bonding and material synthesis. Application of the glassy carbon coating according to the present invention by either spraying glassy carbon directly onto the base or spraying glassy carbon precursors which may be transformed to glassy carbon during the process or by post-coating treatment, e.g. vacuum heating would overcome these difficulties. The textures may be produced by controlling coating parameters such as spraying pattern and time.

Application may also be made for military equipment, such as helicopter propeller blades, to resolve the wear problems described above.

The coating of the present invention may also be applied to provide barrier coating to packaging. As shown in Figure 6, a package, generally illustrated as 90, is encased in a glassy carbon coating 92. The packaging 90 may be of a variety of types, and may include plastic, cardboard, or other packaging materials. The glassy carbon coating 92 prevents carbon dioxide from leaking out of the packaging 90 or oxygen from entering the packaging 90.

Given its broad array of possible applications, the carbon coating method of the present invention may be applied to a variety of substrates, including metals, alloys, so-called nickel-based superalloys (which are currently used in marine turbines), and many polymerized materials.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification, and following claims.

## Claims

1. A method of coating a substrate, the method comprising the steps of:
forming a substrate; and
using energy to apply a glassy carbon coating to said substrate.

2. The method of coating a substrate of claim 1, including the steps of introducing powdered carbon into a plasma gun, allowing said powdered carbon to melt into the plasma produced by the gun to produce a plasma, and applying said metallized plasma gas to a substrate.

3. The method of coating a substrate of claim 1, including the step of forming a spray operation cell.

4. The method of coating a substrate of claim 1, 2 or 3, including the step of pretreating said substrate.

5. The method of coating a substrate of claim 4, including the step of applying a protective layer on said glassy carbon coating.

6. The method of coating a substrate of claim 1, including the step of dipping said substrate into a polymeric bath to substantially coat said substrate.

7. The method of coating a substrate of claim 6, including the step of applying laser energy to said dipped and coated substrate.

8. The method of coating a substrate of claim 7, including the step of employing a plurality of lasers to produce said laser energy.

9. A product produced by the method of any one of the preceding claims.
